# EUROPEAN PATENT SPECIFICATION

(11) **EP 2 224 682 B1**
(45) Date of publication and mention of the grant of the patent: **18.09.2013**
(21) Application number: 09154011.2
(22) Date of filing: 27.02.2009
(51) Int. Cl.: H04L 29/08, H04W 4/06, H04L 12/58

(54) **Communications system providing mobile device notification content type selection features and related method**
Kommunikationssystem mit Auswahlmerkmalen von mobilen Gerätebenachrichtigungsinhalten und zugehöriges Verfahren
Système de communications fournissant des caractéristiques de sélection par type de contenu de notification du dispositif mobile et procédé apparenté

(43) Date of publication of application: 01.09.2010
(73) Proprietor: BlackBerry Limited, Waterloo ON N2L 3W8 (CA)
(72) Inventor: Scott, Sherryl Lee Lorraine, Waterloo, Ontario, N2L 3L3 (CA); Martin-Cocher, Gaelle, Waterloo, Ontario, N2L 3W8 (CA)
(74) Representative: Roberts, Gwilym Vaughan

(56) References cited:
- US-A1- 2002 065 761
- US-A1- 2007 088 821
- US-B1- 6 618 763
- US-B1- 7 249 159

## Description

### Technical Field

The present disclosure relates to the field of communications systems, and, more particularly, to wireless communications systems, devices and related methods.

### Background

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices and the different types of devices available to users. For example, many cellular device now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

As a result, users continue to spend more time using their mobile devices during the course of a day, as opposed to early cellular phones that were used only for phones calls. This has resulted in a significant interest from the advertising community in targeting advertisements to mobile devices.

One exemplary system for providing advertising to a handheld computer is disclosed in U.S. Patent No. 6,874,018 to Wu. The handheld computer includes a screen for displaying visual content received from a network and configured for playing an audio message associated with the visual content. A request for content from the handheld computer is received, and an advertisement is associated with the request for content. The requested content is sent to the handheld computer for display on the screen of the computer, and the associated advertisement is sent to the computer for playing over an audio output device of the handheld computer.

US 7249159 discloses an architecture for a notification platform. In one embodiment, the architecture includes a user mechanism, one or more notification sources and sinks, and a notification manager. The user mechanism stores information regarding notification parameters of a user, such as the user's default notification preferences, and may also contain, access, and/or infer contextual information. Each notification source generates notifications intended for the user, while each notification sink can provide the notifications to the user. Notification sources and sinks provide information via standardized notification schema. The notification manager is designed to appropriately convey the notifications generated by the sources to the sinks, based on information provided by the user mechanism, and by the sources and sinks. As disclosed, the architecture is applicable to entities other users as well.

US 2007/0088821 discloses an advertisement selection and delivery system for selecting advertisements based on profile information and rendering the advertisements as accessible to a user operating a network-capable appliance connected to a data-packet-network. The system comprises, a first server node connected to the network, the first server node functioning as a user access point on the network, a mass storage repository accessible to the first server node, the repository for storing and serving user profile data, a second server node connected to the network, the second server node for generating user preference data, at least one advertisement server connected to the network, the advertisement server for serving advertisement data, a software application for generating user preference lists and performing advertisement selection and at least one network-capable appliance connected to the network the network-capable appliance for receiving the advertisement data. A user operating the network-capable appliance accesses the first server node and receives the advertisement data, the advertisement data selected for service by matching the user preference data to stored advertisements and rendered accessible to the user during the time of user access to the system from the network-capable appliance.

US 2002/0065761 discloses a method and system for notifying a client of a status of an electronic auction. A notification preference is received, the notification preference identifies when to notify the client of a status of the electronic auction. The notification preference is matched to a current status of the electronic auction. Then the notification to the client is transmitted based on the matching of the notification preference to the current status of the electronic auction

US 6618763 discloses a virtual private wireless network in which wireless devices including at least one wireless device having a screen for displaying received text and an intelligent information interconnect device integrating voice messaging, email, and fax services into a single access point. The information interconnect device includes a centralized directory database storing identifying information regarding the wireless devices, and further storing delivery preference hierarchy information for delivering content to the wireless devices. A user interface is provided for specifying criteria used to select at least one device ID from the centralized database, and a message delivery system is provided for searching the centralized database using the specified criteria and transmitting information to the wireless device(s) using the delivery preference hierarchy information.

Despite the advantages of such approaches, further functionality may be desirable in providing notifications, such as advertisements, to mobile wireless communications devices.

The invention is defined in the independent claims. Some optional features of the invention are defined in the dependent claims.

### Brief Description of the Drawings

FIG. 1 is a schematic block diagram of a communications system in accordance with one embodiment.

FIG. 2 is a front view of a mobile wireless communications device that may be used in the system of FIG. 1.

FIG. 3 is a schematic block diagram of alternative embodiment of the system of FIG. 1.

FIG. 4 is a flow diagram of a communications method in accordance with one embodiment.

FIG. 5 is a schematic block diagram illustrating exemplary components of a mobile wireless communications device that may be used with the system of FIG. 1.

### Detailed Description of the Embodiments

The present description is made with reference to the accompanying drawings, in which various exemplary embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communications system is disclosed herein which may include at least one mobile wireless communications device for storing a plurality of notification preferences scheduled for respective different time periods. The notification preferences may be associated with different types of notification content. Further, a notification server may communicate with the at least one mobile wireless communications device via a wireless communications network for determining a scheduled one of the notification preferences, and sending to the at least one mobile wireless communications device notifications including the corresponding type of notification content based on the scheduled one of the notification preferences.

In addition, the at least one mobile wireless communications device may be settable to a temporary override mode to receive notifications including a given type of notification content outside of the respective time period therefor. In are embodiment, the at least one mobile wireless communications device may detect a connection to a local network and enter the override mode based thereon. By way of example, the local network may be a virtual private network (VPN).

At least one of the notification preferences may be a work preference corresponding to work-related notification content, for example. Also by way of example, at least one of the notification preferences may be a non-work preference corresponding to non-work-related notification content. The notification content may include advertisements, for example. Furthermore, the at least one mobile wireless communications device may permit user selection of notification preferences and scheduling thereof. By way of example, the at least one mobile wireless communications device may permit scheduling of time of day notification preferences.

In some embodiments, the at least one mobile wireless communications device may be at least one mobile cellular communications device. The at least one mobile wireless communications device may include a user input device and a processor cooperating with the user input device and the display for selecting the notification preferences.

A related mobile wireless communications device, such as the one described briefly above, and communications method are also provided. The method may include storing a plurality of notification preferences scheduled for respective different time periods, where the notification preferences are associated with different types of notification content. The method may further include using a notification server to communicate with the at least one mobile wireless communications device via a wireless communications network for determining a scheduled one of the notification preferences, and sending to the at least one mobile wireless communications device notifications including the corresponding type of notification content based upon the scheduled one of the notification preferences.

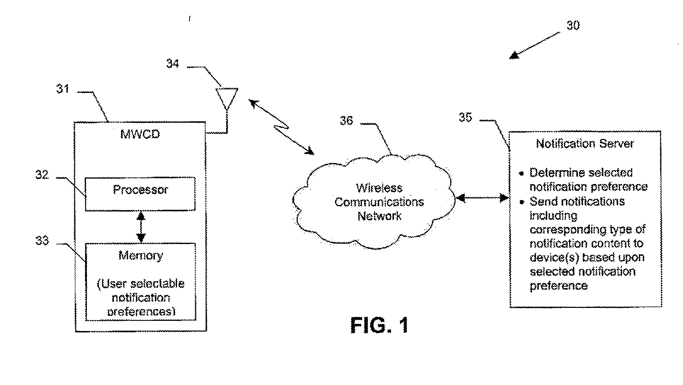

Referring initially to FIG. 1, a communications system **30** illustratively includes one or more mobile wireless communications devices **31** (MWCDs), a notification server **35**, and a wireless communications network **36** through which the device(s) and server communicate. The device **31** illustratively includes a processor **32** (e.g., a microprocessor) and associated memory **33** (e.g., FLASH, removable memory (e.g., SD card), etc.) for storing the notification preferences, which may be user selectable, for example. By way of example, the device **31** and wireless communications network may operate in accordance with a cellular, wireless LAN (e.g., 802.11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Moreover, the device **31** also illustratively includes one or more associated antennas **34.** Various types of mobile wireless communications devices may be used, such as mobile phones, PDAs, laptop computers, wireless-enabled cameras, wireless-enabled media players, etc., for example.

The device **31** advantageously stores a plurality of notification preferences, which may be user selectable, that are associated with different types of notification content. Such notifications may include notices of upcoming events, special offers, advertisements, etc. In particular, the types of notifications that a given user wants to receive may change from time-to-time. For example, when at work (or during working hours) a user may want to received notifications relating to their field of work (e.g., notices of upcoming work-related conferences, discounts on office products, etc.). However, this may be different from the notifications the same user would like to receive in the evening, i.e., during non-working hours. By way of example, the user may desire to see non-work-related content such as sports or entertainment notifications during non-working hours. Non-working hours may be still further subdivided into weekday and weekend preferences. For example, a user may desire to receive still different notifications on the weekends, such as notifications of children or family events, for example.

The notification server **35** communicates with the device(s) **31** via the wireless communications network **36** for determining a scheduled one of the notification preferences. That is, the notification server **35** determines which notification preference is currently selected on the device **31.** This may be done in different ways. In one embodiment, the server **35** may periodically or intermittently prompt the device **31** to provide this information. Another approach is for the device to provide this information to the notification server **35** at various times, such as upon a change in preference settings by the user. Other examples are to provide the information at a time set by the user, or whenever the user indicates he/she is available to receive ads. Upon determining the selected notification preference, the notification server **35** sends notifications including the corresponding type of notification content to the device **31** based thereon. It will be appreciated that the various functions of the notification server **35** described herein may be implemented by a single computer, or distributed between multiple computing devices.

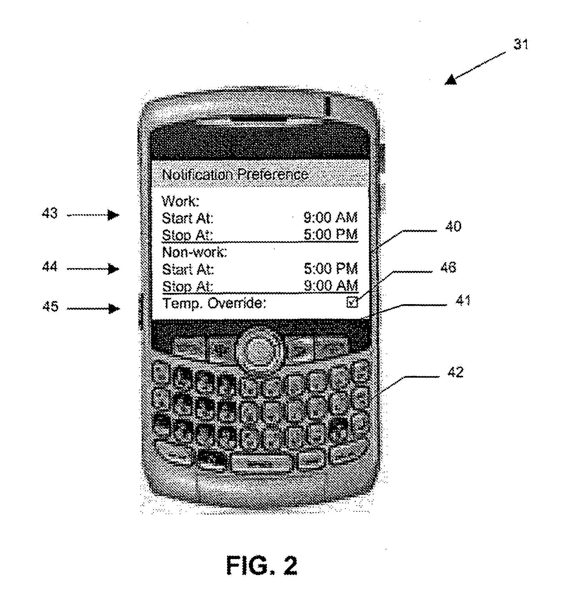

Turning more particularly to FIG. 2, the user selectable notification preferences may correspond to respective different time periods, such as working and non-working periods during the day. In the example of FIG. 2, the mobile device **31** is a smart phone with PDA features. The device **31** illustratively includes a display **40** providing a user interface as shown, and one or more user input devices, such as a track ball **41** and a key pad **42,** although various other types, combinations, or both, of user input devices may also be used. Here, there are two notification preference, the first being a work preference **43** set to a time period preference of 9:00 AM to 5:00 PM. The second notification preference is a non-work preference **44** set to a time period preference of 5:00 PM to 9:00 AM. Of course, other numbers or types of preferences may be used for different times or different days, or both, such as the weekend preference noted above. Another preference option is to have a reduced or "no notification" time of day, that is, a time when the user does not wish to receive any (or limited) notifications.

The device **31** also illustratively has an override option **45** that is settable to allow a temporary override mode. More particularly, the override mode allows for receiving notifications including a given type of notification content that is outside of the respective time period for that content when an override condition is detected. In the present example, this would allow work notifications to be received if the temporary override option is selected and an override condition is detected during non-work hours, and vice-versa. The override mode also allows for blocking, delaying, or dropping notifications of a given type of content that is within the respective time period for that content when an override condition is detected.

As an example, when an override condition is detected, the device 31 may send a message to the notification server to update which preference (e.g., "work preference" or "non-work preference") the notification server should use. The notification server may then, for example, send notifications related to the "work preference" even though the current time period is for the "non-work preference."

Alternatively, the device 31 may handle the override condition locally by not sending a message to update the notification server and delaying or dropping notifications from the notification server. For example, a user is in a meeting that runs into the non-work preference time period, the device may detect this override condition and enforce the work preference even though the time period is for the non-work preference. Should the server still send notifications related to the non-work preference, the device may delay notifications related to the non-work preference until a later time or drop the notifications related to the non-work preference.

In alternative embodiments, the device may detect an override condition from calendar or personal information manager (PIM) data. As an example, setting a period of time as a holiday or a vacation in a calendaring or PIM application on the device may be detected by the device so that during the holiday or vacation, the device will override the work preference with the non-work preference. As such, notifications related to the work preference can be delayed or dropped automatically during the holiday or vacation and notification related to the non-work preference can be received, even though the time period may be related to the work preference.

FIG. 2 depicts an embodiment wherein the temporary override option is user-selectable through the interface by a check box **46,** although buttons or other user interface forms may also be used for this purpose as well, as will be appreciated by the skilled artisan. Optionally, the processor **32** may automatically de-select the override mode after the time period for the current notification type has passed. Another option is that if the override mode is selected, content that may have been sent at that given time could initiate a dialog or queue asking the user to "save content for viewing later", "remind me to view at another time", or a "no I want to take a look and over ride after viewing".

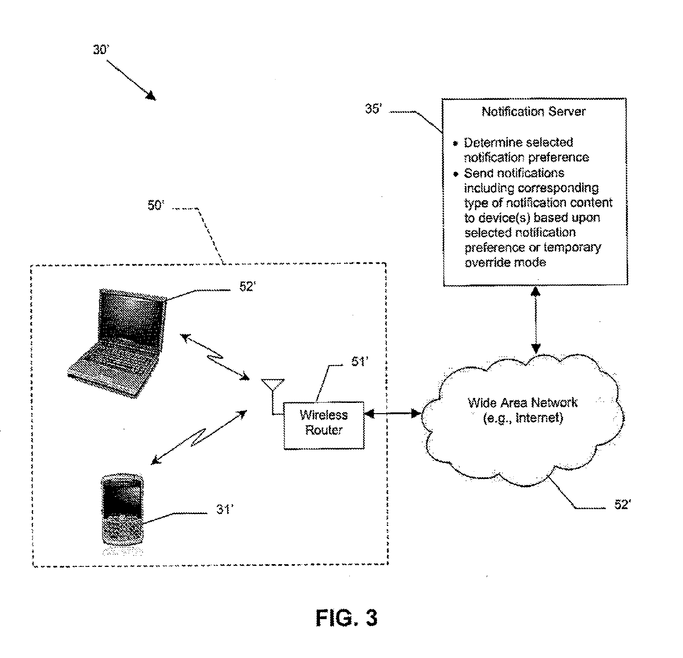

In accordance with an alternative embodiment illustrated in FIG. 3, the device **31'** detects a connection to a local network utilizing a virtual private network (VPN) **50'** through a wireless router **51'**, for example. Based upon such a detection, the device processor **32'** may cause a particular notification preference to be selected, or an override condition might be satisfied that allows for operation in the temporary override mode if the override option is selected. In this scenario, the notification server **35'** may communicate with the device **31'** via a wide area network **52',** such as the Internet, for example. However, this may also be done via a wireless communications network (e.g., a cellular network). That is, communications through either or both types of networks is possible.

By way of example, if the VPN **50'** is at a user's home, then the device **31'** may be configured to select the non-work preference upon detection of a connection to the VPN, Alternately, if a user works from home, connection to the VPN **50'** may mean that the user wishes to receive work-related notification content, and when the user is away from home (i.e., there is no connection to the VPN), then a different notification preference (e.g., non-work) may be selected. Stated alternatively, the selection of the various notification preference modes need not necessarily be time-based. That is, they may instead (or in addition to) be based upon the user's location (as determined by cellular base station connection, GPS, etc.) or network connection, and the notification server **35'** may provide the appropriate notification content accordingly.

In some embodiments, user selection of the notification preference need not require selection of beginning/ending times. For example, the user may be given the option to select a place or mood corresponding to their current "presence," meaning where the user is, what the user is doing, or how the user feels. The ability to set or choose a notification preference in such a manner advantageously allows advertisements or other notifications that are more pertinent to what the user is currently interested in, or what the user may be able to take advantage of based upon his/her location and how he/she feels, for example.

In accordance with one example, a home or social preference selection during the week may result in notifications that include dinner or theater offers. In a "chill" preference, the user may receive a lunch offer, yoga coupon, etc. For a home or active preference on the weekend, the user may receive notification offers for sorting event thickets, skating coupons, etc. Again, because a user may advantageously set or choose notification preferences, the user will advantageously receive ads that are relevant to what he or she is currently doing and his or her needs at appropriate times of the day or night.

In some embodiments, the notification server **35** may account for different locations of the device **31.** For example, if the user travels to a different time zone but does not change the time zone preference on the device, the notification server **35** may determine from a GPS system in the phone, a cellular network, etc., that device **31** is not in its "home" or normal time zone. As such, the notification server **35** may advantageously determine what the actual local time for the device **31** is, and adjust the times that notifications are sent accordingly, as will be appreciated by those skilled in the art.

In some situations, a user may be using the device **31** for a phone call but also wants to receive notifications during the call. For example, the user may be in a situation where he or she may still view a visual notification on screen during a call, such as if a wired or wireless (e.g., Bluetooth) headset or speaker phone is being used. The user may be permitted to indicate to the device **31** a preference to see notifications on the display **40** accordingly. However, if the user is on a call but without the use of a headset or speaker phone, then notifications may be postponed. In accordance with one example, if the user is on a call but without the use of a headset or speaker phone a dialog (or in the case of a phone call an audio queue) may happen may be provided to prompt the user to take or not take an action. In addition to the action indicators or audio queues that may be provided) a message such as "if you take no action the content will play after 5 seconds..." may also be a choice so the user can do nothing to simply let the system show/play the content.

The notifications may be visual notifications (i.e., for display on the screen **40**), audio notifications (i.e., to be played through one or more device speakers), or both, depending on the given embodiment. In particular, the form of the notification may be determined by a user profile various accessories the user may be using. For example, if a headset (wired or wireless) is connected to the device **31,** then notifications may be provided in an audible fashion (e.g., if the user is not on a call), as this may be the best way of delivering the notification to the user. Also by way of example, if the device **31** is set to a "quiet" mode or profile, then any notification shown or selected may be provided without sound. If an advertiser had intended an advertisement notification to include sound, then the sound may be converted to text. The user may also be provided with a selection option on the display **40** to change back to the audio presentation format. This may be particularly useful in situations such as when directions are needed, in that a user may receive directions by audio while simultaneously being provided a map. Accordingly, the content provided may advantageously correspond to the particular context of use of the device **31** at a given time. Moreover, this may correspond to the particular application(s) being used on the device **31,** as will be appreciated by those skilled in the art.

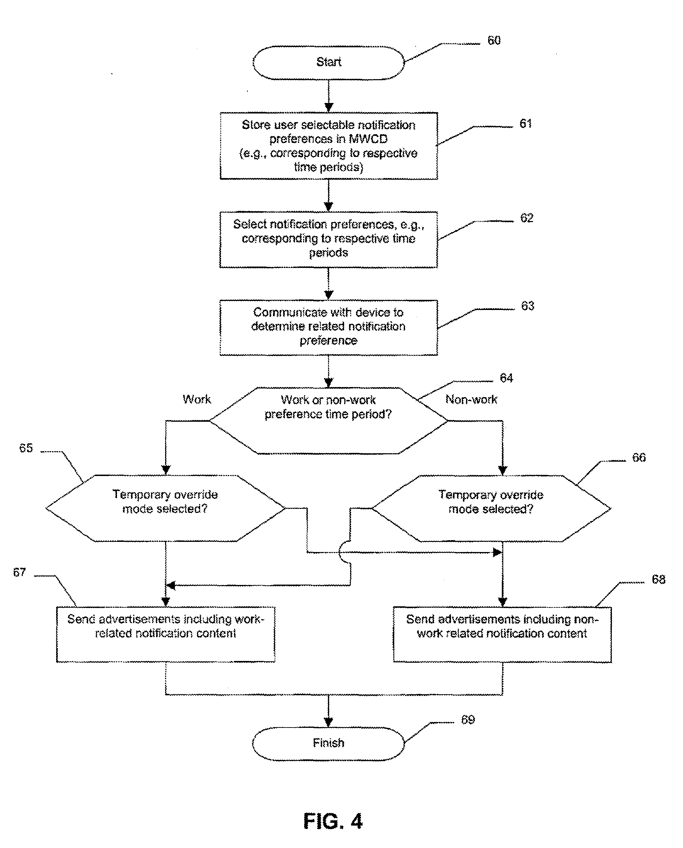

A related mobile wireless communications method is now described with reference to FIG. 4. Beginning at Block **60,** the notification preferences corresponding to different types of notification content are stored in the device(s) **31,** at Block **62,** and a given notification preference is selected as discussed above (e.g., by setting time periods for work and non-work notifications), at Block **62.** The notification server **35** communicates with the device 31 for determining the selected one of the notification preferences (Block **63),** as discussed above. Depending upon the current time, selected time period, whether the override option is selected, and whether an override condition is satisfied, at Blocks **64-66,** the appropriate type of notification content (e.g., advertisements) is then sent to the device **31,** at Block or **67** or **68**, thus concluding the illustrated method (Block **69**).

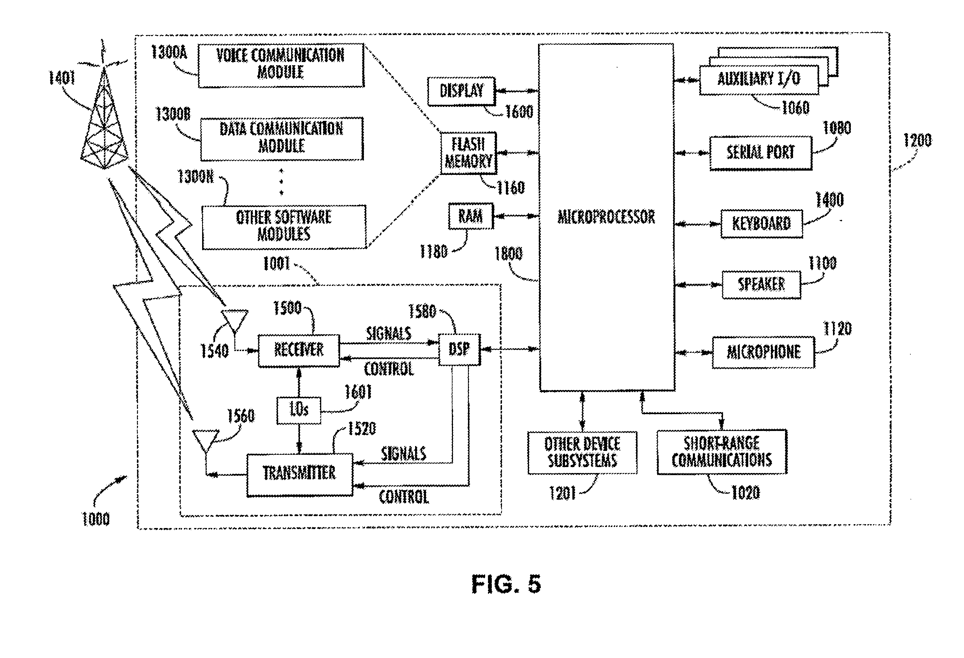

Exemplary components of a hand-held mobile wireless communications device **1000** that may be used in accordance the system **20** is further described in the example below with reference to FIG. 5. The device **1000** illustratively includes a housing **1200,** a keypad **1400** and an output device **1600,** The output device shown is a display **1600,** which may comprise a full graphic LCD. In some embodiments, display **1600** may comprise a touch-sensitive input and output device. Other types of output devices may alternatively be utilized, A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications devices having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DBP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control processes implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120,** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth"' communications module to provide for communication with similarly-enabled systems and devices.

Many modifications and other embodiments will come to the mind of one skilled in the art having the benefit of the teachings presented in the forgoing descriptions and the associated drawings. Therefore, it is understood that various modifications and embodiments are intended to be included within the scope of the appended claims.

## Claims

1. A method for handling notifications by a mobile wireless communications device (31), the method comprising:
setting a plurality of notification preferences at the mobile wireless communication device, each notification preference being scheduled for a time period, and the notification preferences being associated with different types of notification content;
sending the plurality of notification preferences from the mobile wireless communications device to a notification server (35);
receiving the notifications from the notification server at the mobile wireless communications device, the notifications including the corresponding type of notification content based on a respective notification preference and the time period;
setting an override option on the mobile wireless communications device;
detecting an override condition by the mobile wireless communications device;
sending a message to the notification server based upon the override option being set and the override condition being detected, and including an update regarding which notification preference the notification server should use for sending notifications; and
receiving the notifications from the notification server comprising notification content based on the updated notification preference included in the message.

2. The method of claim 1 wherein the override option comprises a temporary override option for the respective time period.

3. The method of claim 1 further comprising providing for at least one of blocking, delaying and dropping notifications based upon the override option being set and the override condition being detected.

4. The method of claim 1 wherein the message also indicated that the override condition was detected.

5. The method of claim 1 wherein the notification are advertisements.

6. A mobile wireless communications device (31) comprising:
a wireless transceiver;
a user input device; and
a processor configured to cooperate with said wireless transceiver and said user input device to set a plurality of notification preferences, each notification preference being scheduled for a time period, and the notification preferences being associated with the different types of notification content,
send the plurality of notification content preferences from the mobile wireless communications device to a notifications server (35),
receive the notifications from the notifications server, the notifications including the corresponding type of notification content based on a respective notification preference and the time period,
set an override option on the mobile wireless communications device,
detect an override condition by the mobile wirless communications device,
send a message to the notification server based on upon the override option being set and the override condition being detected, and including an update regarding which notification preference the notification server should use for sending notifications, and
receive the notifications from the notification server comprising notification content based on the updated notification preference included in the message.

7. The mobile wireless communications device of claim 6 wherein the notifications are advertisements.

8. The mobile wireless communications device of claim 6 wherein the override option comprises a temporary override option for the respective time period.

9. The mobile wireless communications device of claim 6 wherein the processor is configured to provide for at least one of blocking, delaying and dropping notifications based upon the override option being set and the override condition being delected.

10. A mobile wireless communications device of claim6 wherein the message also indicates that the override condition was detected.

11. The mobile wireless communications device of claim 6 wherein the override condition is that the mobile wireless device is connected to a local area network.

12. The mobile wireless communications device of claim 11 wherein the local area network comprises a virtual private network (VPN).

13. A notification server adapted to cooperate with the mobile wireless communications device as claimed in any one of claims 6 to 12, said server configured to receive the plurality of notification preferences and a message from the mobile wireless communications device based upon the override option being set on the mobile wireless communication device and the override condition being detected by the mobile wireless communication device, and including an update regarding which notification preference the notification server should use for sending notifications; said server being further configured to send the notifications to the mobile wireless communications device based on said message.

14. A method performed by a notification server that is adapted to cooperate with the mobile wireless communications device as claimed in any one of claims 1 to 5, the method comprising:
receiving the plurality of notification preferences and a message from the mobile wireless communications device based upon the override option being set on the mobile wireless communication device and the override condition being detected by the mobile wireless communication device, and including an update regarding which notification preference the notification server should use for sending notifications; and
sending the notifications to the mobile wireless communications device based on said message.

15. A computer-readable storage medium containing instructions with are configured to cause execution of the method of any one of claims 1 to 5 and 14.

## Patentansprüche

1. Ein Verfahren zur Handhabung von Benachrichtigungen durch eine mobile drahtlose Kommunikationsvorrichtung (31), wobei das Verfahren aufweist:
Setzen einer Vielzahl von Benachrichtigungspräferenzen an der mobilen drahtlosen Kommunikationsvorrichtung, wobei jede Benachrichtigungspräferenz für eine Zeitdauer geplant ist, und wobei die Benachrichtigungspräferenzen mit verschiedenen Typen von Benachrichtigungsinhalt assoziiert sind;
Senden der Vielzahl von Benachrichtigungspräferenzen von der mobilen drahtlosen Kommunikationsvorrichtung an einen Benachrichtigungsserver (35);
Empfangen der Benachrichtigungen von dem Benachrichtigungsserver an der mobilen drahtlosen Kommunikationsvorrichtung, wobei die Benachrichtigungen den entsprechenden Typ von Benachrichtigungsinhalt umfassen, basierend auf einer jeweiligen Benachrichtigungspräferenz und der Zeitdauer;
Setzen einer Aufheben-Option an der mobilen drahtlosen Kommunikationsvorrichtung;
Erfassen einer Aufheben-Bedingung durch die mobile drahtlose Kommunikationsvorrichtung;
Senden einer Nachricht an den Benachrichtigungsserver basierend darauf, dass die Aufheben-Option gesetzt ist und die Aufheben-Bedingung erfasst wird, und Aufnehmen einer Aktualisierung in Bezug darauf, welche Benachrichtigungspräferenz der Benachrichtigungsserver zum Senden von Benachrichtigungen verwenden soll; und
Empfangen der Benachrichtigungen von dem Benachrichtigungsserver, die Benachrichtigungsinhalt aufweisen basierend auf der aktualisierten Benachrichtigungspräferenz, die in der Nachricht enthalten ist.

2. Das Verfahren gemäß Anspruch 1, wobei die Aufheben-Option eine temporäre Aufheben-Option für die jeweilige Zeitdauer aufweist.

3. Das Verfahren gemäß Anspruch 1, das weiter aufweist ein Vorsehen zumindest einer aus Blockieren-, Verzögern- und Fallenlassen-Benachrichtigungen basierend darauf, dass die Aufheben-Option gesetzt ist und die Aufheben-Bedingung erfasst wird.

4. Das Verfahren gemäß Anspruch 1, wobei die Nachricht auch angibt, dass die Aufheben-Bedingung erfasst wurde.

5. Das Verfahren gemäß Anspruch 1, wobei die Benachrichtigungen Werbeanzeigen sind.

6. Eine mobile drahtlose Kommunikationsvorrichtung (31), die aufweist:
einen drahtlosen Transceiver;
eine Benutzereingabevorrichtung; und
einen Prozessor, der konfiguriert ist zum Zusammenarbeiten mit dem drahtlosen Transceiver und der Benutzereingabevorrichtung zum Setzen einer Vielzahl von Benachrichtigungspräferenzen, wobei jede Benachrichtigungspräferenz für eine Zeitdauer geplant ist, und wobei die Benachrichtigungspräferenzen mit den verschiedenen Typen von Benachrichtigungsinhalt assoziiert sind,
Senden der Vielzahl von Benachrichtigungsinhaltpräferenzen von der mobilen drahtlosen Kommunikationsvorrichtung an einen Benachrichtigungsserver (35),
Empfangen der Benachrichtigungen von dem Benachrichtigungsserver,
wobei die Benachrichtigungen den entsprechenden Typ von Benachrichtigungsinhalt umfassen, basierend auf einer jeweiligen Benachrichtigungspräferenz und der Zeitdauer,
Setzen einer Aufheben-Option an der mobilen drahtlosen Kommunikationsvorrichtung,
Erfassen einer Aufheben-Bedingung durch die mobile drahtlose Kommunikationsvorrichtung,
Senden einer Nachricht an den Benachrichtigungsserver basierend darauf,
dass die Aufheben-Option gesetzt ist und die Aufheben-Bedingung erfasst wird, und Aufnehmen einer Aktualisierung in Bezug darauf, welche Benachrichtigungspräferenz der Benachrichtigungsserver zum Senden von Benachrichtigungen verwenden soll, und
Empfangen der Benachrichtigungen von dem Benachrichtigungsserver, die Benachrichtigungsinhalt aufweisen basierend auf der aktualisierten Benachrichtigungspräferenz, die in der Nachricht enthalten ist.

7. Die mobile drahtlose Kommunikationsvorrichtung gemäß Anspruch 6, wobei die Benachrichtigungen Werbeanzeigen sind.

8. Die mobile drahtlose Kommunikationsvorrichtung gemäß Anspruch 6, wobei die Aufheben-Option eine temporäre Aufheben-Option für die jeweilige Zeitdauer aufweist.

9. Die mobile drahtlose Kommunikationsvorrichtung gemäß Anspruch 6, wobei der Prozessor konfiguriert ist zum Vorsehen zumindest einer aus Blockieren-, Verzögern- und Fallenlassen-Benachrichtigungen basierend darauf, dass die Aufheben-Option gesetzt ist und die Aufheben-Bedingung erfasst wird.

10. Die mobile drahtlose Kommunikationsvorrichtung gemäß Anspruch 6, wobei die Nachricht auch angibt, dass die Aufheben-Bedingung erfasst wurde.

11. Die mobile drahtlose Kommunikationsvorrichtung gemäß Anspruch 6, wobei die Aufheben-Bedingung ist, dass die mobile drahtlose Vorrichtung mit einem lokalen Netzwerk verbunden ist.

12. Die mobile drahtlose Kommunikationsvorrichtung gemäß Anspruch 11, wobei das lokale Netzwerk ein virtuelles privates Netzwerk (VPN - virtual private network) aufweist.

13. Ein Benachrichtigungsserver, der ausgebildet ist zum Zusammenarbeiten mit der mobilen drahtlosen Kommunikationsvorrichtung gemäß einem der Ansprüche 6 bis 12, wobei der Server konfiguriert ist zum Empfangen der Vielzahl von Benachrichtigungspräferenzen und einer Nachricht von der mobilen drahtlosen Kommunikationsvorrichtung basierend darauf, dass die Aufheben-Option an der mobilen drahtlosen Kommunikationsvorrichtung gesetzt ist und die Aufheben-Bedingung von der mobilen drahtlosen Kommunikationsvorrichtung erfasst wird, und Aufnehmen einer Aktualisierung in Bezug darauf, welche Benachrichtigungspräferenz der Benachrichtigungsserver zum Senden von Benachrichtigungen verwenden soll, wobei der Server weiter konfiguriert ist zum Senden der Benachrichtigungen an die mobile drahtlose Kommunikationsvorrichtung basierend auf der Nachricht.

14. Ein Verfahren, das von einem Benachrichtigungsserver durchgeführt wird, der ausgebildet ist zum Zusammenarbeiten mit der mobilen drahtlosen Kommunikationsvorrichtung gemäß einem der Ansprüche 1 bis 5, wobei das Verfahren aufweist:
Empfangen der Vielzahl von Benachrichtigungspräferenzen und einer Nachricht von der mobilen drahtlosen Kommunikationsvorrichtung basierend darauf, dass die Aufheben-Option an der mobilen drahtlosen Kommunikationsvorrichtung gesetzt ist und die Aufheben-Bedingung von der mobilen drahtlosen Kommunikationsvorrichtung erfasst wird, und
Aufnehmen einer Aktualisierung in Bezug darauf, welche Benachrichtigungspräferenz der Benachrichtigungsserver zum Senden von Benachrichtigungen verwenden soll; und
Senden der Benachrichtigungen an die mobile drahtlose Kommunikationsvorrichtung basierend auf der Nachricht.

15. Ein computerlesbares Speichermedium, das Anweisungen enthält, die konfiguriert sind zum Veranlassen einer Ausführung des Verfahrens gemäß einem der Ansprüche 1 bis 5 und 14.

## Revendications

1. Procédé de traitement de notifications par un dispositif de communications sans fil mobile (31), le procédé comprenant le fait :
de définir une pluralité de préférences de notification au niveau du dispositif de communications sans fil mobile, chaque préférence de notification étant programmée pour une certaine période, et les préférences de notification étant associées à différents types de contenu de notification ;
d'envoyer la pluralité de préférences de notification à partir du dispositif de communications sans fil mobile à un serveur de notification (35) ;
de recevoir les notifications à partir du serveur de notifications au niveau du dispositif de communications sans fil mobile, les notifications comportant le type correspondant du contenu de notification sur la base d'une préférence de notification respective et de la période ;
de définir une option de surclassement sur le dispositif de communications sans fil mobile ;
de détecter une condition de surclassement par le dispositif de communications sans fil mobile ;
d'envoyer un message au serveur de notification sur la base de l'option de surclassement qui est définie et de la condition de surclassement qui est détectée, et d'inclure une mise à jour concernant la préférence de notification que le serveur de notification doit utiliser pour envoyer des notifications ; et
de recevoir les notifications à partir du serveur de notification comprenant un contenu de notification sur la base de la préférence de notification mise à jour incluse dans le message.

2. Procédé de la revendication 1, dans lequel l'option de surclassement comprend une option de surclassement temporaire pour la période respective.

3. Procédé de la revendication 1 comprenant en outre le fait d'assurer au moins l'un du blocage, du retardement et de l'abandon des notifications sur la base de l'option de surclassement qui est définie et de la condition de surclassement qui est détectée.

4. Procédé de la revendication 1, dans lequel le message a également indiqué que la condition de surclassement a été détectée.

5. Procédé de la revendication 1, dans lequel les notifications sont des publicités.

6. Dispositif de communications mobile sans fil (31) comprenant :
un émetteur-récepteur sans fil ;
un dispositif d'entrée utilisateur, et
un processeur configuré pour coopérer avec ledit émetteur-récepteur sans fil et ledit dispositif d'entrée utilisateur pour définir une pluralité de préférences de notification, chaque préférence de notification étant programmée pour une certaine période, et les préférences de notification étant associées aux différents types de contenu de notification,
l'envoi de la pluralité de préférences de contenu de notification à partir du dispositif de communications sans fil mobile à un serveur de notification (35),
la réception des notifications à partir du serveur de notifications, les notifications comportant le type correspondant de contenu de notification sur la base d'une préférence de notification respective et de la période,
la définition d'une option de surclassement sur le dispositif de communications sans fil mobile,
la détection d'une condition de surclassement par le dispositif de communications sans fil mobile,
l'envoi d'un message au serveur de notification sur la base de l'option de surclassement qui est définie et de la condition de surclassement qui est détectée, et le fait d'inclure une mise à jour concernant la préférence de notification que le serveur de notification doit utiliser pour envoyer des notifications, et
la réception des notifications à partir du serveur de notifications comprenant un contenu de notification sur la base de la préférence de notification mise à jour incluse dans le message.

7. Dispositif de communications sans fil mobile de la revendication 6, dans lequel les notifications sont des publicités.

8. Dispositif de communications sans fil mobile de la revendication 6, dans lequel l'option de surclassement comprend une option de surclassement temporaire pour la période respective.

9. Dispositif de communications sans fil mobile de la revendication 6, dans lequel le processeur est configuré pour assurer au moins l'un du blocage, du retardement et de l'abandon des notifications sur la base de l'option de surclassement qui est définie et de la condition de surclassement qui est détectée.

10. Dispositif de communications sans fil mobile de la revendication 6, dans lequel le message indique également que la condition de surclassement a été détectée.

11. Dispositif de communications sans fil mobile de la revendication 6, dans lequel la condition de surclassement est que le dispositif sans fil mobile est connecté à un réseau local.

12. Dispositif de communications sans fil mobile de la revendication 11, dans lequel le réseau local comprend un réseau privé virtuel (VPN).

13. Serveur de notification adapté pour coopérer avec le dispositif de communications sans fil mobile tel que revendiqué dans l'une quelconque des revendications 6 à 12, ledit serveur étant configuré pour recevoir la pluralité de préférences de notification et un message à partir du dispositif de communications sans fil mobile sur la base de l'option de surclassement qui est définie sur le dispositif de communications sans fil mobile et de la condition de surclassement qui est détectée par le dispositif de communications sans fil mobile, et pour inclure une mise à jour concernant la préférence de notification que le serveur de notification doit utiliser pour envoyer des notifications ;
ledit serveur étant en outre configuré pour envoyer des notifications au dispositif de communications sans fil mobile sur la base dudit message.

14. Procédé mis en oeuvre par un serveur de notification qui est adapté pour coopérer avec le dispositif de communications sans fil mobile tel que revendiqué dans l'une quelconque des revendications 1 à 5, le procédé comprenant le fait :
de recevoir la pluralité de préférences de notification et un message à partir du dispositif de communications sans fil mobile sur la base de l'option de surclassement qui est définie sur le dispositif de communications sans fil mobile et de la condition de surclassement qui est détectée par le dispositif de communications sans fil mobile, et d'inclure une mise à jour concernant la préférence de notification que le serveur de notification doit utiliser pour envoyer des notifications ; et
d'envoyer les notifications au dispositif de communications sans fil mobile sur la base dudit message.

15. Support de stockage lisible par ordinateur contenant des instructions qui sont configurées pour entraîner l'exécution du procédé de l'une quelconque des revendications 1 à 5 et 14,
